(19) **Europäisches Patentamt / European Patent Office / Office européen des brevets**

(11) **EP 4 773 370 A1**

(12) # EUROPEAN PATENT APPLICATION
published in accordance with Art. 153(4) EPC

(43) Date of publication:
**08.07.2026 Bulletin 2026/28**

(21) Application number: **23959973.1**

(22) Date of filing: **01.12.2023**

(51) International Patent Classification (IPC):
**H01M 50/242** *(2021.01)* **H01M 10/058** *(2010.01)*
**H01M 10/0525** *(2010.01)*

(52) Cooperative Patent Classification (CPC):
**H01M 10/0525; H01M 10/058; H01M 50/242**

(86) International application number:
**PCT/CN2023/135986**

(87) International publication number:
**WO 2025/112067 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dongguan Amperex Technology
Limited
Dongguan City, Guangdong Province 523000
(CN)**

(72) Inventors:
• **CHEN, Tengteng
Dongguan City, Guangdong Province 523000
(CN)**
• **WU, Ke
Dongguan City, Guangdong Province 523000
(CN)**
• **DENG, Daolin
Dongguan City, Guangdong Province 523000
(CN)**
• **CHEN, Wen
Dongguan City, Guangdong Province 523000
(CN)**

(74) Representative: **Kraus & Lederer PartGmbB
Thomas-Wimmer-Ring 15
80539 München (DE)**

(54) ## ELECTROCHEMICAL DEVICE AND ELECTRICAL APPARATUS

(57) The present application discloses an electrochemical apparatus and an electric device, the electrochemical apparatus including a housing, an electrode assembly, and an adhesive member. The housing includes a first sidewall, and the electrode assembly is disposed within the housing and includes a first side surface adjacent to the first sidewall, the first side surface including a second region, a first region, and a third region arranged sequentially along a first direction. The adhesive member is located between the housing and the electrode assembly. The adhesive member includes a first side and a second side opposite each other, the first side including a first adhesive zone bonded to the first sidewall, the second side including a second adhesive zone bonded to the second region, a third adhesive zone bonded to the third region, and a first non-adhesive zone located between the second adhesive zone and the third adhesive zone. Along a second direction, a projection of the first adhesive zone overlaps with the first non-adhesive zone, the second direction being a direction in which the first sidewall is opposite the first side surface. The first non-adhesive zone provided in the adhesive member of the present application is not bonded to the first side surface, which helps reduce the risk of damage to the electrode assembly.

EP 4 773 370 A1

FIG. 3

**Description**

**TECHNICAL FIELD**

The present application relates to the field of energy storage technology, and in particular, to an electrochemical apparatus and an electric device.

**BACKGROUND**

To address issues such as internal short circuit and top seal rupture caused by the movement of an internal electrode assembly in an electrochemical apparatus like a battery during a drop, a double-sided adhesive layer is typically provided between the electrode assembly and the housing of the electrochemical apparatus. One surface of the adhesive layer is bonded to the housing, and the other surface is bonded to the electrode assembly to suppress movement of the electrode assembly. This reduces, to some extent, the risk of failure of the electrochemical apparatus during a drop, thereby improving the safety of the electrochemical apparatus.

**SUMMARY**

However, the inventors of the present application have found that the existing structure, which uses double-sided adhesive tape to bond and fix the electrode assembly to the housing, can suppress the movement of the electrode assembly during a drop of the electrochemical apparatus but poses a risk of tearing the foil material on the outer periphery of the electrode assembly, potentially causing an internal short circuit.

In view of this, the present application provides an electrochemical apparatus and an electric device, aiming to suppress the movement of the electrode assembly relative to the housing while reducing the risk of damage to the foil material on the outer periphery of the electrode assembly, thereby improving the safety of the electrochemical apparatus.

According to a first aspect of the present application, an electrochemical apparatus is provided, the electrochemical apparatus including a housing, an electrode assembly, and an adhesive member. The housing includes a first sidewall. The electrode assembly is disposed within the housing, and the electrode assembly includes a first side surface adjacent to the first sidewall, the first side surface including a first region, a second region, and a third region, where, along a first direction, the first region is located between the second region and the third region. The adhesive member is located between the housing and the electrode assembly, the adhesive member including a first side and a second side opposite each other, the first side being adjacent to the housing, and the second side facing away from the housing. The first side includes a first adhesive layer, the first adhesive layer including a first adhesive zone bonded to the first sidewall. The second side includes a second adhesive layer and a third adhesive layer, the second adhesive layer including a second adhesive zone bonded to the second region, the third adhesive layer including a third adhesive zone bonded to the third region, the surface of the second side including a first non-adhesive zone not bonded to the first region, and the first non-adhesive zone being located between the second adhesive zone and the third adhesive zone. Along a second direction, a projection of the first adhesive layer overlaps with the first non-adhesive zone, the second direction being the direction in which the first sidewall is opposite the first side surface.

In the present application, by providing the adhesive member between the first side surface and the first sidewall, the housing and the electrode assembly are fixed at relative positions through the first adhesive layer, the second adhesive layer, and the third adhesive layer of the adhesive member, which helps reduce the risk of movement of the electrode assembly when the electrochemical apparatus is subjected to an impact. Additionally, the adhesive member is provided with the first non-adhesive zone that is not bonded to the first side surface, which helps reduce the impact force transmitted by the adhesive member to the electrode assembly when the electrochemical apparatus is subjected to an impact, thereby reducing the risk of damage to the electrode plates on the outer periphery of the electrode assembly.

In some embodiments, the adhesive member further includes a substrate layer, the first adhesive layer is disposed on a surface of the substrate layer facing the housing, and the second adhesive layer and the third adhesive layer are disposed on a surface of the substrate layer facing the electrode assembly. This configuration eliminates the need for composite multilayer adhesive tapes to achieve bonding between the housing and the electrode assembly, thereby helping reduce the overall thickness of the electrochemical apparatus and increase the energy density of the electrochemical apparatus.

In some embodiments, the surface of the first side further includes a second non-adhesive zone and a third non-adhesive zone that are not bonded to the first sidewall. Along the first direction, the first adhesive zone is located between the second non-adhesive zone and the third non-adhesive zone. Along the second direction, a projection of the second non-adhesive zone overlaps with the second adhesive zone, and a projection of the third non-adhesive zone overlaps with the third adhesive zone. This configuration reduces the pulling force exerted by the adhesive member on the first side surface when the electrochemical apparatus is subjected to an impact, thereby reducing the risk of damage to the electrode plates on the outer periphery of the electrode assembly.

In some embodiments, along the second direction, the first non-adhesive zone covers the projection of the first adhesive zone, the projection of the second non-adhesive zone covers the second adhesive zone, and the projection of the third non-adhesive zone covers the third adhesive zone.

In some embodiments, along the first direction, a distance between the first adhesive zone and the second adhesive zone is greater than 0, and a distance between the first adhesive zone and the third adhesive zone is greater than 0. This configuration allows a portion of the adhesive member to be neither bonded to the first sidewall nor to the first side surface. When the electrochemical apparatus is subjected to an impact, the force from the housing is dissipated and absorbed through local deformation of the adhesive member during transmission to the electrode assembly, suppressing relative positional movement between the electrode assembly and the housing while further reducing the force transmitted by the adhesive member to the first side surface, thereby reducing the risk of damage to the electrode plates on the outer periphery of the electrode assembly.

In some embodiments, along the second direction, the projection of the first adhesive zone covers the first non-adhesive zone, the projection of the first adhesive zone overlaps with the second adhesive zone, and the projection of the first adhesive zone overlaps with the third adhesive zone. This configuration helps increase the bonding area between the adhesive member and the housing and allows a portion of the adhesive member to be bonded to both the first sidewall and the first side surface simultaneously, thereby helping enhance the bonding strength between the electrode assembly and the housing, further reducing the risk of relative positional movement between the electrode assembly and the housing, and effectively reducing the force transmitted by the adhesive member to the first side surface.

In some embodiments, a portion of the surface of the substrate layer facing the electrode assembly is exposed to form the first non-adhesive zone; and a portion of the surface of the substrate layer facing the housing is exposed to form the second non-adhesive zone and the third non-adhesive zone. This configuration eliminates the need for composite multilayer adhesive tapes to achieve a portion of the adhesive member not bonded to the housing and a portion of the adhesive member not bonded to the first side surface, thereby helping reduce the overall thickness of the electrochemical apparatus and increase the energy density of the electrochemical apparatus.

In some embodiments, the adhesive member further includes a first non-adhesive layer, a second non-adhesive layer, and a third non-adhesive layer. The first non-adhesive layer is bonded to a surface of the second adhesive layer and/or the third adhesive layer to form the first non-adhesive zone. The second non-adhesive layer is bonded to a side surface of the first adhesive layer facing away from the second region to form the second non-adhesive zone. The third non-adhesive layer is bonded to a side surface of the first adhesive layer facing away from the third region to form the third non-adhesive zone. This configuration allows the first adhesive layer, the second adhesive layer, and the third adhesive layer to be fully applied to the substrate layer, followed by bonding the second non-adhesive layer and the third non-adhesive layer on the first adhesive layer to form the second non-adhesive zone and the third non-adhesive zone, and bonding the first non-adhesive layer on the second adhesive layer and/or the third adhesive layer to form the first non-adhesive zone. By adjusting the area and position of the first non-adhesive layer, the second non-adhesive layer, and the third non-adhesive layer, the area and position of the first non-adhesive zone, the second non-adhesive zone, and the third non-adhesive zone can be adjusted, providing a simple, efficient, and cost-effective method for forming and adjusting the non-adhesive zones.

In some embodiments, the substrate layer includes a first substrate portion and a second substrate portion, the first substrate portion is provided with the second adhesive layer and a portion of the first adhesive layer, and the second substrate portion is provided with the third adhesive layer and a portion of the first adhesive layer. The first substrate portion and the second substrate portion are arranged along the first direction; or, the first substrate portion and the second substrate portion are arranged along a third direction, the third direction being perpendicular to both the first direction and the second direction.

In some embodiments, along the first direction, a width of the electrode assembly is W, and along the third direction, a length of the electrode assembly is L, the third direction being perpendicular to both the first direction and the second direction.

In some embodiments, along the first direction, a distance between a center of the first adhesive zone and a center of the first side surface is $D_1$, satisfying $D_1 \leq 0.1W$. This configuration helps promote more uniform pulling of the electrode assembly by the housing, further suppressing cell movement and reducing the risk of damage to the electrode plates on the outer periphery of the electrode assembly.

In some embodiments, along the third direction, a distance between the center of the first adhesive zone and the center of the first side surface is $D_2$, satisfying $D_2 \leq 0.1L$. This configuration helps promote more uniform pulling of the electrode assembly by the housing, further suppressing cell movement and reducing the risk of damage to the electrode plates on the outer periphery of the electrode assembly.

In some embodiments, along the first direction, a width of the first adhesive zone is $W_1$, satisfying $0.3W \leq W_1 \leq 0.8W$. When this condition is satisfied, the pass rate of the battery drop test is improved, which helps reduce the risk of movement of the electrode assembly and damage to the electrode plates on the outer periphery of the electrode assembly.

In some embodiments, along the third direction, a length of the first adhesive zone is $L_1$, satisfying $0.4L \leq L_1 \leq 0.8L$. When this condition is satisfied, the pass rate of the battery drop test is improved, which helps reduce the risk of movement of the electrode assembly and damage to the electrode plates on the outer periphery of the electrode assembly.

In some embodiments, along the first direction, a width of the second adhesive zone is $w_1$, satisfying $0.05W \leq w_1 \leq 0.45W$. When this condition is satisfied, the pass rate of the battery drop test is improved, which helps reduce the risk of movement of the electrode assembly and damage to the electrode plates on the outer periphery of the electrode assembly.

In some embodiments, along the first direction, a width of the third adhesive zone is $w_2$, satisfying $0.05W \leq w_2 \leq 0.45W$. When this condition is satisfied, the pass rate of the battery drop test is improved, which helps reduce the risk of movement of the electrode assembly and damage to the electrode plates on the outer periphery of the electrode assembly.

In some embodiments, along the third direction, a length of the first adhesive zone is $L_1$, and a length of the second adhesive zone is $1_1$, satisfying $1_1 \geq 0.4L_1$. When this condition is satisfied, the pass rate of the battery drop test is improved, which helps reduce the risk of movement of the electrode assembly and damage to the electrode plates on the outer periphery of the electrode assembly.

In some embodiments, along the third direction, a length of the first adhesive zone is $L_1$, and a length of the third adhesive zone is $1_2$, satisfying $1_2 \geq 0.4L_1$. When this condition is satisfied, the pass rate of the battery drop test is improved, which helps reduce the risk of movement of the electrode assembly and damage to the electrode plates on the outer periphery of the electrode assembly.

In some embodiments, the second adhesive zone includes a plurality of second adhesive sub-zones spaced apart along the third direction. This configuration further reduces the risk of movement of the electrode assembly and damage to the electrode plates on the outer periphery of the electrode assembly.

In some embodiments, the third adhesive zone includes a plurality of third adhesive sub-zones spaced apart along the third direction. This configuration further reduces the risk of movement of the electrode assembly and damage to the electrode plates on the outer periphery of the electrode assembly.

In some embodiments, along the first direction, a distance from the first adhesive zone to a side edge of the substrate layer is $W_2$, satisfying $0 \leq W_2 \leq 0.45W$. When this condition is satisfied, the pass rate of the battery drop test is improved, which helps reduce the risk of movement of the electrode assembly and damage to the electrode plates on the outer periphery of the electrode assembly.

In some embodiments, along the first direction, a distance from the first adhesive zone to another side edge of the substrate layer is $W_3$, satisfying $0 \leq W_3 \leq 0.45W$. When this condition is satisfied, the pass rate of the battery drop test is improved, which helps reduce the risk of movement of the electrode assembly and damage to the electrode plates on the outer periphery of the electrode assembly.

In some embodiments, along the third direction, a distance from the first adhesive zone to a side edge of the substrate layer is $L_2$, satisfying $0 \leq L_2 \leq 0.4L_1$. When this condition is satisfied, the pass rate of the battery drop test is improved, which helps reduce the risk of movement of the electrode assembly and damage to the electrode plates on the outer periphery of the electrode assembly.

In some embodiments, along the third direction, a distance from the first adhesive zone to another side edge of the substrate layer is $L_3$, satisfying $0 \leq L_3 \leq 0.4L_1$. When this condition is satisfied, the pass rate of the battery drop test is improved, which helps reduce the risk of movement of the electrode assembly and damage to the electrode plates on the outer periphery of the electrode assembly.

In some embodiments, along the first direction, a distance between the second adhesive zone and the first adhesive zone is $H_1$, satisfying $H_1 \leq 0.25W$. When this condition is satisfied, the pass rate of the battery drop test is improved, which helps reduce the risk of movement of the electrode assembly and damage to the electrode plates on the outer periphery of the electrode assembly.

In some embodiments, along the first direction, a distance between the third adhesive zone and the first adhesive zone is $H_2$, satisfying $H_2 \leq 0.25W$. When this condition is satisfied, the pass rate of the battery drop test is improved, which helps reduce the risk of movement of the electrode assembly and damage to the electrode plates on the outer periphery of the electrode assembly.

In some embodiments, along the second direction, the projection of the first adhesive zone has a first overlapping region with the second adhesive zone, and a width of the first overlapping region along the first direction is $q_1$, satisfying $q_1 \leq 0.32W$. When this condition is satisfied, the pass rate of the battery drop test is improved, which helps reduce the risk of movement of the electrode assembly and damage to the electrode plates on the outer periphery of the electrode assembly.

In some embodiments, along the second direction, the projection of the first adhesive zone has a second overlapping region with the third adhesive zone, and a width of the second overlapping region along the first direction is $q_2$, satisfying $q_2 \leq 0.32W$. When this condition is satisfied, the pass rate of the battery drop test is improved, which helps reduce the risk of movement of the electrode assembly and damage to the electrode plates on the outer periphery of the electrode assembly.

In some embodiments, the electrode assembly further includes a second side surface, a third side surface, and a fourth side surface. The second side surface is disposed opposite the first side surface along the second direction, and the third side surface is disposed opposite the fourth side surface along the first direction. The second adhesive layer is bonded to both the second region and the third side surface. This configuration allows the adhesive member to transmit the force from the housing to the third side surface of the electrode assembly. When the electrode assembly is of a wound structure, the electrode plates on the arc-shaped third side surface more easily disperse the force transmitted by the adhesive member, thereby helping reduce the risk of damage to the electrode plates on the outer periphery of the electrode assembly. When the electrode assembly is of a laminated structure, the adhesive member is bonded to the edges of the separator, positive electrode plate, or negative electrode plate on the third side surface, which is less likely to cause damage to the electrode plates of the electrode assembly and helps suppress relative sliding between the separator and the positive electrode plate or negative electrode plate.

In some embodiments, the third adhesive layer is bonded to both the third region and the fourth side surface. This configuration allows the adhesive member to transmit the force from the housing to the fourth side surface of the electrode assembly. When the electrode assembly is of a wound structure, the electrode plates on the arc-shaped fourth side surface more easily disperse the force transmitted by the adhesive member, thereby helping reduce the risk of damage to the electrode plates on the outer periphery of the electrode assembly. When the electrode assembly is of a laminated structure, the adhesive member is bonded to the edges of the separator, positive electrode plate, or negative electrode plate on the fourth side surface, which is less likely to cause damage to the electrode plates of the electrode assembly and helps suppress relative sliding between the separator and the positive electrode plate or negative electrode plate.

In some embodiments, the second adhesive layer is bonded to the second side surface. This configuration increases the bonding area between the adhesive member and the electrode assembly, thereby helping enhance the bonding strength of the adhesive member to the electrode assembly.

In some embodiments, the third adhesive layer is bonded to the second side surface. This configuration increases the bonding area between the adhesive member and the electrode assembly, thereby helping enhance the bonding strength of the adhesive member to the electrode assembly.

In some embodiments, the first side surface further includes a fourth region and a fifth region. Along the third direction, the first region is located between the fourth region and the fifth region. The second side further includes a fourth adhesive layer and a fifth adhesive layer, the fourth adhesive layer including a fourth adhesive zone bonded to the fourth region, and the fifth adhesive layer including a fifth adhesive zone bonded to the fifth region. Along the third direction, the first non-adhesive zone is located between the fourth adhesive zone and the fifth adhesive zone, the third direction being perpendicular to both the first direction and the second direction. This configuration further reduces the risk of movement of the electrode assembly and damage to the electrode plates on the outer periphery of the electrode assembly when the electrochemical apparatus is subjected to an impact.

In some embodiments, the fourth adhesive zone includes a plurality of fourth adhesive sub-zones spaced apart along the first direction. This configuration further reduces the risk of movement of the electrode assembly and damage to the electrode plates on the outer periphery of the electrode assembly.

In some embodiments, the fifth adhesive zone includes a plurality of fifth adhesive sub-zones spaced apart along the first direction. This configuration further reduces the risk of movement of the electrode assembly and damage to the electrode plates on the outer periphery of the electrode assembly.

In some embodiments, the electrode assembly further includes a fifth side surface and a sixth side surface disposed opposite each other along the third direction, and the fourth adhesive layer is further bonded to the fifth side surface. This configuration further reduces the risk of movement of the electrode assembly and damage to the electrode plates on the outer periphery of the electrode assembly.

In some embodiments, the fourth adhesive layer is further bonded to the second side surface. This configuration increases the bonding area between the adhesive member and the electrode assembly, thereby helping enhance the bonding strength of the adhesive member to the electrode assembly.

In some embodiments, the fifth adhesive layer is further bonded to the sixth side surface. This configuration further reduces the risk of movement of the electrode assembly and damage to the electrode plates on the outer periphery of the electrode assembly.

In some embodiments, the fifth adhesive layer is further bonded to the second side surface. This configuration increases the bonding area between the adhesive member and the electrode assembly, thereby helping enhance the bonding strength of the adhesive member to the electrode assembly.

According to a second aspect of the present application, an electric device is provided, including the electrochemical apparatus according to any of the above embodiments. The electrochemical apparatus has a reduced risk of movement and damage to the electrode assembly during drop tests, thereby improving the reliability of the electric device.

BRIEF DESCRIPTION OF DRAWINGS

FIG. 1 is a schematic structural diagram of an electrochemical apparatus provided by an embodiment of the present application.

FIG. 2 is an exploded schematic diagram of the electrochemical apparatus shown in FIG. 1.

FIG. 3 is a cross-sectional view of an electrochemical apparatus provided by an embodiment of the present application.

FIG. 4 is a cross-sectional view of an adhesive member and an electrode assembly provided by an embodiment of the present application.

FIG. 5 is a cross-sectional view of an adhesive member and an electrode assembly provided by another embodiment of the present application.

FIG. 6 is a side view of an adhesive member provided by an embodiment of the present application.

FIG. 7 is a side view of an adhesive member provided by another embodiment of the present application.

FIG. 8 is a side view of an adhesive member provided by still another embodiment of the present application.

FIG. 9 is a side view of an adhesive member provided by yet still another embodiment of the present application.

FIG. 10 is a side view of an adhesive member provided by yet still another embodiment of the present application.

FIG. 11 is a top view of an adhesive member and an electrode assembly provided by an embodiment of the present application.

FIG. 12 is a top view of an adhesive member and an electrode assembly provided by another embodiment of the present application.

FIG. 13 is a schematic diagram of an electric device provided by an embodiment of the present application.

DESCRIPTION OF REFERENCE SIGNS OF MAIN COMPONENTS

| | |
|---|---|
| electrochemical apparatus | 100 |
| housing | 10 |
| first sidewall | 11 |
| second sidewall | 12 |
| third sidewall | 13 |
| fourth sidewall | 14 |
| fifth sidewall | 15 |
| sixth sidewall | 16 |
| electrode assembly | 20 |
| first side surface | 21 |
| first region | 211 |
| second region | 212 |
| third region | 213 |
| second side surface | 22 |
| third side surface | 23 |
| fourth side surface | 24 |
| fifth side surface | 25 |
| sixth side surface | 26 |
| adhesive member | 30 |
| first side | 31 |
| first adhesive layer | 311 |
| first adhesive zone | 3111 |
| second non-adhesive zone | 312 |
| third non-adhesive zone | 313 |
| second side | 32 |
| first non-adhesive zone | 321 |
| second adhesive layer | 322 |
| second adhesive zone | 3221 |
| third adhesive layer | 323 |
| third adhesive zone | 3231 |

(continued)

| | |
|---|---|
| first non-adhesive layer | 33 |
| second non-adhesive layer | 34 |
| third non-adhesive layer | 35 |
| first overlapping region | 36 |
| second overlapping region | 37 |
| substrate layer | 301 |
| first substrate portion | 3011 |
| second substrate portion | 3012 |
| tab | 50 |
| device body | 200 |
| electric device | 1000 |
| first direction | X |
| second direction | Y |
| third direction | Z |

## DETAILED DESCRIPTION

The technical solutions in some embodiments of the present application are described below. It is apparent that the described embodiments are only some of embodiments of the present application, rather than all embodiments.

It should be noted that, in the present application, the center of a region refers to the centroid of the planar shape of the region when the region is a continuous whole. It can be understood that the centroid of the planar shape can be determined by the suspension method, where the planar shape is suspended with a thin string, a straight line is drawn in the vertical direction from the starting point of the string, the planar shape is suspended again from a different endpoint, and another straight line is drawn in the same manner. The intersection of the two straight lines is the centroid of the planar shape. When the region consists of multiple discrete regions, the center of the region is the center of the smallest circumscribed circle encompassing the multiple discrete regions. It can be understood that the smallest circumscribed circle is the circle with the smallest radius that encompasses the multiple discrete regions.

It can be understood that when a component is considered to be "connected" to another component, it may be directly connected to the another component or there may be an intermediate component present simultaneously. When a component is considered to be "disposed on" another component, it may be directly disposed on the another component or there may be an intermediate component present simultaneously. The terms "top," "bottom," and similar expressions used herein are for illustrative purposes only.

The terms "first," "second," and the like are used only to distinguish different objects and should not be construed as indicating or implying relative importance, the number of technical features indicated, a specific order, or a primary-secondary relationship.

The term "perpendicular" is used to describe an ideal state between two parts. In actual production or use, an approximation of this perpendicular state may exist between two parts. The two parts described as "perpendicular" may not be absolutely straight lines or planes, but may be substantially straight lines or planes. From a macroscopic perspective, as long as the overall extension direction is a straight line or plane, the parts can be considered as a "straight line" or "plane."

It should be recognized that the dimensions and thicknesses of the components shown in the drawings are for better understanding and more convenient description, and the present application is not limited to the dimensions and thicknesses shown in the drawings.

Unless otherwise defined, all technical and scientific terms used herein have the same meaning as commonly understood by those skilled in the technical field of the present application. The terms used in the specification of the present application herein are for the purpose of describing specific embodiments only and are not intended to limit the present application.

The following describes some embodiments of the present application with reference to the accompanying drawings. In the absence of conflict, these embodiments and features in these embodiments described below may be combined with each other.

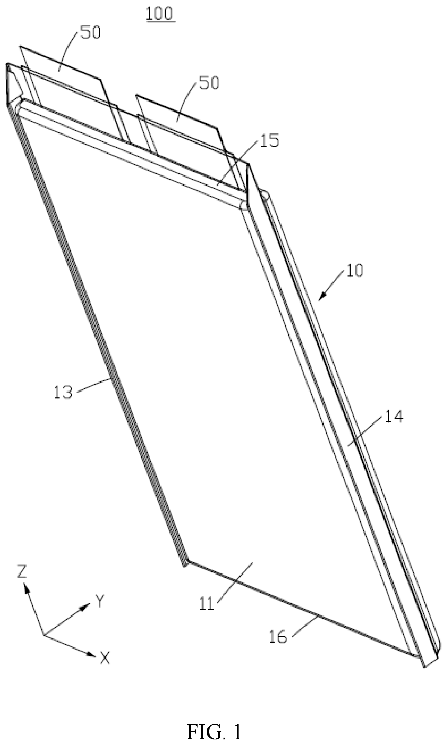

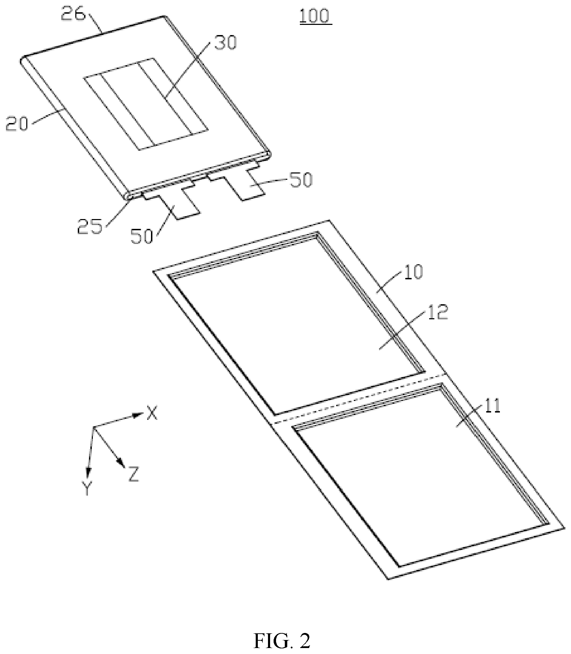

Referring to FIG. 1 and FIG. 2, an embodiment of the present application provides an electrochemical apparatus 100, the electrochemical apparatus 100 including a housing 10, an electrode assembly 20, and an adhesive member 30. The electrode assembly 20 is disposed within the housing 10, the adhesive member 30 is disposed within the housing 10, and the adhesive member 30 is located between the housing 10 and the electrode assembly 20, the adhesive member 30 bonding the housing 10 and the electrode assembly 20.

In some embodiments, referring to FIG. 1 and FIG. 2, the housing 10 includes a first sidewall 11 and a second sidewall 12 disposed opposite each other, and the electrode assembly 20 is located between the first sidewall 11 and the second sidewall 12.

In some embodiments, referring to FIG. 1 and FIG. 2, the housing 10 further includes a third sidewall 13, a fourth sidewall 14, a fifth sidewall 15, and a sixth sidewall 16. The third sidewall 13 and the fourth sidewall 14 are disposed opposite each other along a first direction X, the first sidewall 11 and the second sidewall 12 are disposed opposite each other along a second direction Y, and the fifth sidewall 15 and the sixth sidewall 16 are disposed opposite each other along a third direction Z, the first direction X, the second direction Y, and the third direction Z being perpendicular to each other. The first sidewall 11, the second sidewall 12, the third sidewall 13, the fourth sidewall 14, the fifth sidewall 15, and the sixth sidewall 16 collectively form a space for accommodating the electrode assembly 20.

In some embodiments, the housing 10 is an aluminum-plastic film, and the housing 10 is not limited to an aluminum-plastic film.

In some embodiments, the electrode assembly 20 includes a positive electrode plate, a negative electrode plate, and a separator. The positive electrode plate, the negative electrode plate, and the separator may be stacked to form a laminated structure, or the positive electrode plate, the negative electrode plate, and the separator may be stacked and then wound to form a wound structure.

In some embodiments, the positive electrode plate includes a positive electrode current collector and a positive electrode active material layer disposed on the positive electrode current collector; and the negative electrode plate includes a negative electrode current collector and a negative electrode active material layer disposed on the negative electrode current collector.

In some embodiments, a portion of the positive electrode current collector is provided with the positive electrode active material layer, and a portion of the positive electrode current collector is not provided with the positive electrode active material layer; and a portion of the negative electrode current collector is provided with the negative electrode active material layer, and a portion of the negative electrode current collector is not provided with the negative electrode active material layer.

The positive electrode current collector and the negative electrode current collector may be metal layers. As an exemplary illustration, the positive electrode current collector may be a metal layer including at least one of aluminum, nickel, tantalum, or titanium, such as aluminum foil. The positive electrode active material layer includes a positive electrode active material, and the positive electrode active material may include at least one of lithium cobalt oxide, lithium nickel cobalt manganese oxide, lithium nickel cobalt aluminum oxide, lithium iron phosphate, lithium manganese iron phosphate, or lithium manganese oxide. The negative electrode current collector may be a metal layer including at least one of copper, nickel, tantalum, or titanium, such as copper foil. The negative electrode active material layer includes a negative electrode active material, and the negative electrode active material may include at least one of graphite, hard carbon, soft carbon, silicon, silicon-oxygen material, or silicon-carbon material.

In some embodiments, the outermost periphery of the electrode assembly 20 has a positive electrode current collector layer not provided with the positive electrode active material layer, and the positive electrode current collector is aluminum foil.

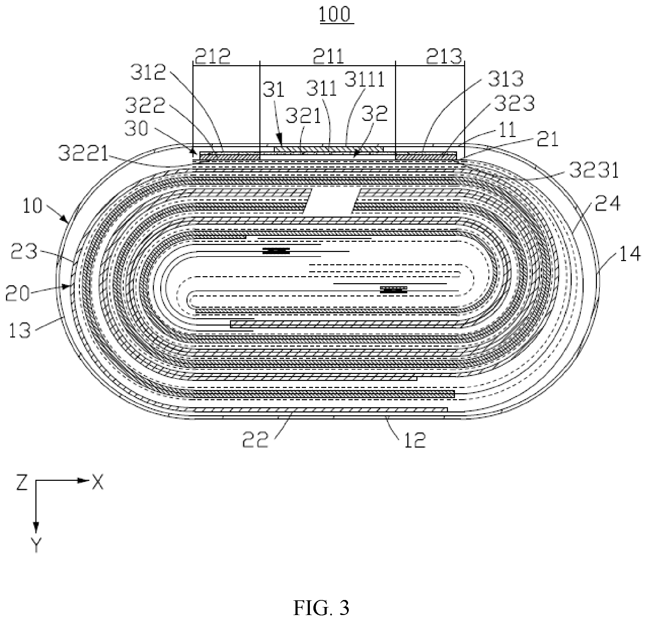

In some embodiments, referring to FIG. 3, the electrode assembly 20 includes a first side surface 21 adjacent to the first sidewall 11, the first side surface 21 including a first region 211, a second region 212, and a third region 213, where, along the first direction X, the first region 211 is located between the second region 212 and the third region 213.

In some embodiments, referring to FIG. 3, the electrode assembly 20 further includes a second side surface 22, a third side surface 23, and a fourth side surface 24. Along the second direction Y, the first side surface 21 is disposed opposite the second side surface 22, the first side surface 21 is adjacent to the first sidewall 11 compared to the second side surface 22, the first side surface 21 is disposed opposite the first sidewall 11, and the second side surface 22 faces away from the first sidewall 11. The third side surface 23 and the fourth side surface 24 are disposed opposite each other along the first direction X. When the electrode assembly 20 is of a wound structure, the third side surface 23 and the fourth side surface 24 are arc-shaped side surfaces.

In some embodiments, referring to FIG. 2, the electrode assembly 20 further includes a fifth side surface 25 and a sixth side surface 26, the fifth side surface 25 and the sixth side surface 26 being disposed opposite each other along the third direction Z.

In some embodiments, referring to FIG. 1 and FIG. 2, the electrochemical apparatus 100 further includes a tab 50, the tab 50 being connected to the electrode assembly 20. Along the third direction Z, the tab 50 extends out of the housing 10 from the fifth side surface 25 or the sixth side surface 26 of the electrode assembly 20 to lead out the polarity of the electrode assembly 20. When the tab 50 is connected to the positive electrode plate of the electrode assembly 20, the tab 50 is a positive tab 50; when the tab 50 is connected to the negative electrode plate of the electrode assembly 20, the tab 50 is a negative tab 50. The tab 50 may be made of metallic copper or metallic aluminum, with no specific limitation herein.

In some embodiments, referring to FIG. 3, the adhesive member 30 includes a first side 31 and a second side 32 disposed opposite each other, the first side 31 being adjacent to the housing 10 compared to the second side 32, and the second side 32 facing away from the housing 10. The first side 31 includes a first adhesive layer 311, the first adhesive layer 311 including a first adhesive zone 3111 bonded to the first sidewall 11. The second side 32 includes a second adhesive layer 322 and a third adhesive layer 323, the second adhesive layer 322 including a second adhesive zone 3221 bonded to the second region 212, the third adhesive layer 323 including a third adhesive zone 3231 bonded to the third region 213, the surface of the second side 32 including a first non-adhesive zone 321 not bonded to the first region 211, and the first non-adhesive zone 321 being located between the second adhesive zone 3221 and the third adhesive zone 3231. Along the second direction Y, a projection of the first adhesive zone 3111 overlaps with the first non-adhesive zone 321. The second direction Y is the direction in which the first sidewall 11 is opposite the first side surface 21.

By providing the adhesive member 30 between the first side surface 21 and the first sidewall 11, the housing 10 and the electrode assembly 20 are fixed at relative positions through the first adhesive layer 311, the second adhesive layer 322, and the third adhesive layer 323 of the adhesive member 30, which helps reduce the risk of movement of the electrode assembly 20 when the electrochemical apparatus 100 is subjected to an impact. Additionally, the adhesive member 30 is provided with the first non-adhesive zone 321 that is not bonded to the first side surface 21, which helps reduce the impact force transmitted by the adhesive member 30 to the electrode assembly 20 when the electrochemical apparatus 100 is subjected to an impact, thereby reducing the risk of damage to the electrode plates on the outer periphery of the electrode assembly 20.

In some embodiments, the first adhesive layer 311, the second adhesive layer 322, and the third adhesive layer 323 may be adhesive materials that are sticky at room temperature without requiring activation. The first adhesive layer 311, the second adhesive layer 322, and the third adhesive layer 323 may alternatively be materials that are not sticky at room temperature but become sticky after activation through a hotpressing process.

In some embodiments, the second adhesive zone 3221 includes a plurality of second adhesive sub-zones spaced apart along the third direction Z. In some embodiments, the third adhesive zone 3231 includes a plurality of third adhesive sub-zones spaced apart along the third direction Z. This configuration further reduces the risk of movement of the electrode assembly 20 and damage to the electrode plates on the outer periphery of the electrode assembly 20.

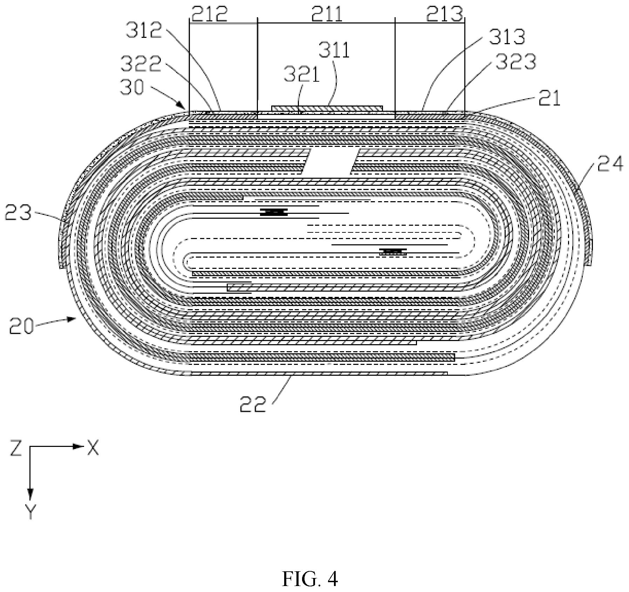

In some embodiments, referring to FIG. 4, the second adhesive layer 322 is bonded to both the second region 212 and the third side surface 23. This configuration allows the adhesive member 30 to transmit the force from the housing 10 to the third side surface 23 of the electrode assembly 20. When the electrode assembly 20 is of a wound structure, the electrode plates on the arc-shaped third side surface 23 more easily disperse the force transmitted by the adhesive member 30, thereby helping reduce the risk of damage to the electrode plates on the outer periphery of the electrode assembly 20. When the electrode assembly 20 is of a laminated structure, the adhesive member 30 is bonded to the edges of the separator, positive electrode plate, or negative electrode plate on the third side surface 23, which is less likely to cause damage to the electrode plates of the electrode assembly 20 and helps suppress relative sliding between the separator and the positive electrode plate or negative electrode plate.

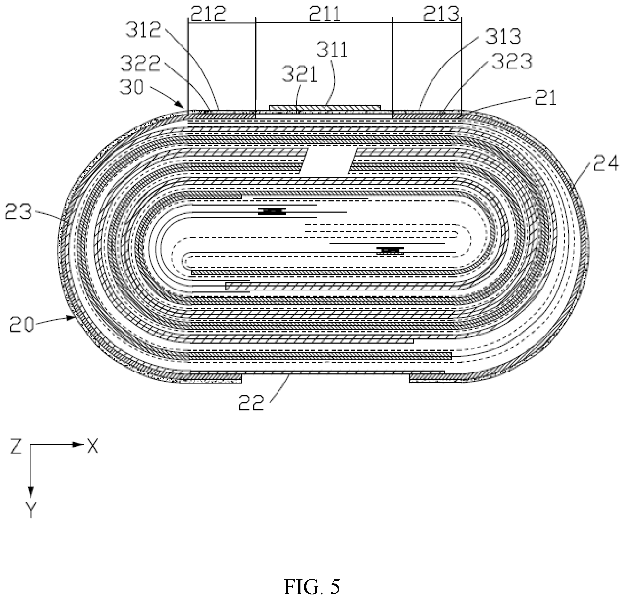

In some embodiments, referring to FIG. 5, the second adhesive layer 322 is bonded to the second side surface 22. This configuration increases the bonding area between the adhesive member 30 and the electrode assembly 20, thereby helping enhance the bonding strength of the adhesive member 30 to the electrode assembly 20.

In some embodiments, referring to FIG. 4, the third adhesive layer 323 is bonded to both the third region 213 and the fourth side surface 24. This configuration allows the adhesive member 30 to transmit the force from the housing 10 to the fourth side surface 24 of the electrode assembly 20. When the electrode assembly 20 is of a wound structure, the electrode plates on the arc-shaped fourth side surface 24 more easily disperse the force transmitted by the adhesive member 30, thereby helping reduce the risk of damage to the electrode plates on the outer periphery of the electrode assembly 20. When the electrode assembly 20 is of a laminated structure, the adhesive member 30 is bonded to the edges of the separator, positive electrode plate, or negative electrode plate on the fourth side surface 24, which is less likely to cause damage to the electrode plates of the electrode assembly 20 and helps suppress relative sliding between the separator and the positive electrode plate or negative electrode plate.

In some embodiments, referring to FIG. 5, the third adhesive layer 323 is bonded to the second side surface 22. This configuration increases the bonding area between the adhesive member 30 and the electrode assembly 20, thereby helping enhance the bonding strength of the adhesive member 30 to the electrode assembly 20.

In embodiments where the second adhesive layer 322 is bonded to both the second region 212 and the third side surface 23, and the third adhesive layer 323 is bonded to both the third region 213 and the fourth side surface 24, the adhesive member 30 transmits the force from the housing 10 to two sides of the electrode assembly 20 along the first direction X, which helps improve the uniformity of the force applied to the electrode assembly 20.

In some embodiments, the first side surface 21 further includes a fourth region and a fifth region. Along the third direction Z, the first region 211 is located between the fourth region and the fifth region. The second side 32 further includes a fourth adhesive layer and a fifth adhesive layer, the fourth adhesive layer including a fourth adhesive zone bonded to the fourth region, and the fifth adhesive layer including a fifth adhesive zone bonded to the fifth region. Along the third direction Z, the first non-adhesive zone 321 is located between the fourth adhesive zone and the fifth adhesive zone, the third direction Z being perpendicular to both the first direction X and the second direction Y. This configuration further reduces the risk of movement of the electrode assembly 20 and damage to the electrode plates on the outer periphery of the electrode assembly 20 when the electrochemical apparatus is subjected to an impact.

In some embodiments, the fourth adhesive zone includes a plurality of fourth adhesive sub-zones spaced apart along the first direction X. In some embodiments, the fifth adhesive zone includes a plurality of fifth adhesive sub-zones spaced apart along the first direction X. This configuration further reduces the risk of movement of the electrode assembly 20 and damage to the electrode plates on the outer periphery of the electrode assembly 20.

In some embodiments, the electrode assembly further includes a fifth side surface and a sixth side surface disposed opposite each other along the third direction, and the fourth adhesive layer is further bonded to the fifth side surface. In some embodiments, the fifth adhesive layer is further bonded to the sixth side surface. This configuration further reduces the risk of movement of the electrode assembly 20 and damage to the electrode plates on the outer periphery of the electrode assembly 20.

In some embodiments, the fourth adhesive layer is further bonded to the second side surface 22. In some embodiments, the fifth adhesive layer is further bonded to the second side surface 22. This configuration increases the bonding area between the adhesive member 30 and the electrode assembly 20, thereby helping enhance the bonding strength of the adhesive member 30 to the electrode assembly 20.

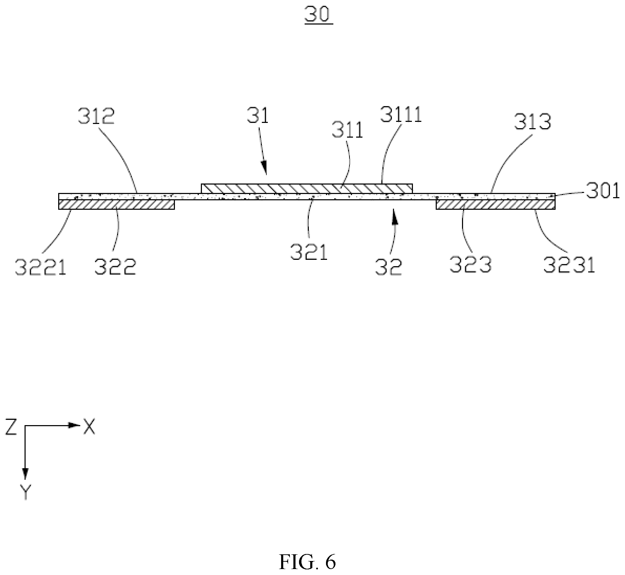

In some embodiments, referring to FIG. 3 and FIG. 6, the first side 31 further includes a second non-adhesive zone 312 and a third non-adhesive zone 313 that are not bonded to the first sidewall 11. Along the first direction X, the first adhesive zone 3111 is located between the second non-adhesive zone 312 and the third non-adhesive zone 313. Along the second direction Y, a projection of the second non-adhesive zone 312 overlaps with the second adhesive zone 3221, and a projection of the third non-adhesive zone 313 overlaps with the third adhesive zone 3231. This configuration reduces the pulling force exerted by the adhesive member 30 on the first side surface 21 when the electrochemical apparatus 100 is subjected to an impact, thereby reducing the risk of damage to the electrode plates on the outer periphery of the electrode assembly 20.

In some embodiments, referring to FIG. 3 and FIG. 6, along the second direction Y, the first non-adhesive zone 321 covers the projection of the first adhesive zone 3111, the projection of the second non-adhesive zone 312 covers the second adhesive zone 3221, and the projection of the third non-adhesive zone 313 covers the third adhesive zone 3231.

In some embodiments, referring to FIG. 3 and FIG. 6, along the first direction X, a distance between the first adhesive zone 3111 and the second adhesive zone 3221 is greater than 0, and a distance between the first adhesive zone 3111 and the third adhesive zone 3231 is greater than 0. This configuration allows a portion of the adhesive member 30 to be neither bonded to the first sidewall 11 nor to the first side surface 21. When the electrochemical apparatus 100 is subjected to an impact, the force from the housing 10 is dissipated and absorbed through local deformation of the adhesive member 30 during transmission to the electrode assembly 20, suppressing relative positional movement between the electrode assembly 20 and the housing 10 while further reducing the force transmitted by the adhesive member 30 to the first side surface 21, thereby reducing the risk of damage to the electrode plates on the outer periphery of the electrode assembly 20.

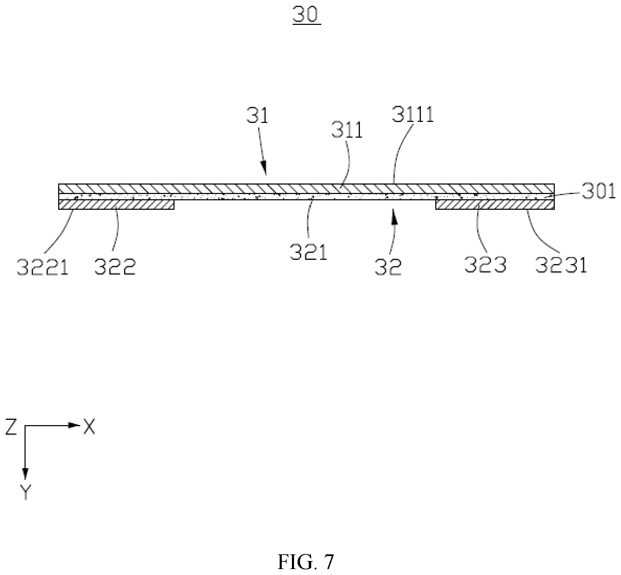

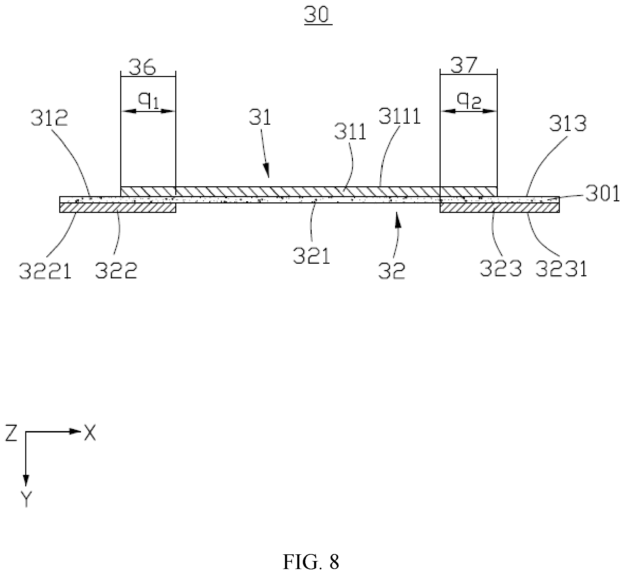

In some other embodiments, referring to FIG. 7 and FIG. 8, along the second direction Y, the projection of the first adhesive zone 3111 covers the first non-adhesive zone 321, the projection of the first adhesive zone 3111 overlaps with the second adhesive zone 3221, and the projection of the first adhesive zone 3111 overlaps with the third adhesive zone 3231. This configuration helps increase the bonding area between the adhesive member 30 and the housing 10 and allows a portion of the adhesive member 30 to be bonded to both the first sidewall 11 and the first side surface 21 simultaneously, thereby helping enhance the bonding strength between the electrode assembly 20 and the housing 10, further reducing the risk of relative positional movement between the electrode assembly 20 and the housing 10, and effectively reducing the force transmitted by the adhesive member 30 to the first side surface 21. It can be understood that, in this embodiment, the second non-adhesive zone 312 and the third non-adhesive zone 313 may be present or the second non-adhesive zone 312 and the third non-adhesive zone 313 may not be present.

In some embodiments, referring to FIG. 3 and FIG. 6 to FIG. 8, the adhesive member 30 further includes a substrate layer 301, the first adhesive layer 311 is disposed on a surface of the substrate layer 301 facing the housing 10, and the second adhesive layer 322 and the third adhesive layer 323 are disposed on a surface of the substrate layer 301 facing the electrode assembly 20. This configuration eliminates the need for composite multilayer adhesive tapes to achieve bonding between the housing 10 and the electrode assembly 20, thereby helping reduce the overall thickness of the electrochemical apparatus 100 and increase the energy density of the electrochemical apparatus 100.

It can be understood that the first adhesive layer 311, the second adhesive layer 322, and the third adhesive layer 323 may be formed by applying an adhesive material to predetermined regions of the substrate layer 301; alternatively, the first adhesive layer 311, the second adhesive layer 322, and the third adhesive layer 323 may be formed by applying the adhesive material to two surfaces of the substrate layer 301 and then partially removing the adhesive material.

In some embodiments, the material of the substrate layer 301 may include any one of PET (polyethylene terephthalate), PVC (polyvinyl chloride), or PI (polyimide).

In some embodiments, referring to FIG. 3 and FIG. 6 to FIG. 8, a portion of the surface of the substrate layer 301 facing the electrode assembly 20 is exposed to form the first non-adhesive zone 321; and a portion of the surface of the substrate layer 301 facing the housing 10 is exposed to form the second non-adhesive zone 312 and the third non-adhesive zone 313. This configuration eliminates the need for composite multilayer adhesive tapes to achieve a portion of the adhesive member 30 not bonded to the housing 10 and a portion of the adhesive member 30 not bonded to the first side surface 21, thereby helping reduce the overall thickness of the electrochemical apparatus 100 and increase the energy density of the electrochemical apparatus 100.

It can be understood that a covering may be pre-applied to predetermined surfaces of the substrate layer 301, and then the adhesive material is applied to the substrate layer 301, with the covered surfaces forming the exposed first non-adhesive zone 321, second non-adhesive zone 312, and third non-adhesive zone 313 without the adhesive material. Alternatively, the adhesive material may be applied to two surfaces of the substrate layer 301, and then the adhesive material is removed from local surfaces, enabling the exposed surfaces of the substrate layer 301 where the adhesive material is removed to form the first non-adhesive zone 321, the second non-adhesive zone 312, and the third non-adhesive zone 313.

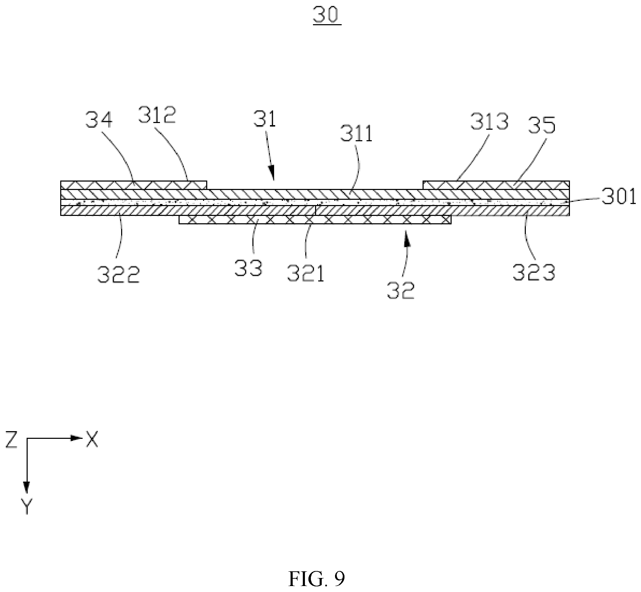

In some embodiments, referring to FIG. 9, the adhesive member 30 further includes a first non-adhesive layer 33, a second non-adhesive layer 34, and a third non-adhesive layer 35. The first non-adhesive layer 33 is bonded to a surface of the second adhesive layer 322 and/or the third adhesive layer 323 to form the first non-adhesive zone 321. The second non-adhesive layer 34 is bonded to a side surface of the first adhesive layer 311 facing away from the second region 212 to form the second non-adhesive zone 312. The third non-adhesive layer 35 is bonded to a side surface of the first adhesive layer 311 facing away from the third region 213 to form the third non-adhesive zone 313. This configuration allows the first adhesive layer 311, the second adhesive layer 322, and the third adhesive layer 323 to be fully applied to the substrate layer 301, followed by bonding the first non-adhesive layer 33, the second non-adhesive layer 34, and the third non-adhesive layer 35 to form the first non-adhesive zone 321, the second non-adhesive zone 312, and the third non-adhesive zone 313. By adjusting the area and position of the first non-adhesive layer 33, the second non-adhesive layer 34, and the third non-adhesive layer 35, the area and position of the first non-adhesive zone 321, the second non-adhesive zone 312, and the third non-adhesive zone 313 can be adjusted, providing a simple, efficient, and cost-effective method for forming and adjusting the non-adhesive zones.

It can be understood that the first non-adhesive layer 33, the second non-adhesive layer 34, and the third non-adhesive layer 35 may be layers with no adhesive material on two surfaces. Alternatively, the first non-adhesive layer 33, the second non-adhesive layer 34, and the third non-adhesive layer 35 may be layers with adhesive material on one surface and no adhesive material on the other surface. For example, the side of the first non-adhesive layer 33 facing the first adhesive layer 311 has adhesive material, while the side of the first non-adhesive layer 33 facing away from the first adhesive layer 311 has no adhesive material.

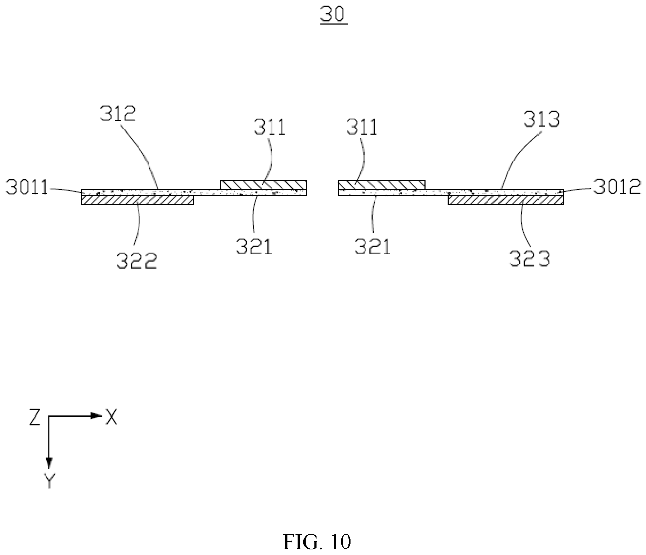

In some embodiments, referring to FIG. 10, the substrate layer 301 includes a first substrate portion 3011 and a second substrate portion 3012, the first substrate portion 3011 and the second substrate portion 3012 being independent parts. The first substrate portion 3011 is provided with the second adhesive layer 322 and a portion of the first adhesive layer 311, and the second substrate portion 3012 is provided with the third adhesive layer 323 and a portion of the first adhesive layer 311. The first substrate portion 3011 and the second substrate portion 3012 are arranged along the first direction. This configuration helps reduce the risk of damage to the electrode plates on the outer periphery of the electrode assembly 20.

In some other embodiments, the first substrate portion 3011 and the second substrate portion 3012 are arranged along the third direction Z. This configuration helps reduce the risk of damage to the electrode plates on the outer periphery of the electrode assembly 20.

It can be understood that the surface of the first substrate portion 3011 facing the first region 211 and the surface of the second substrate portion 3012 facing the first region 211 together form the first non-adhesive zone 321.

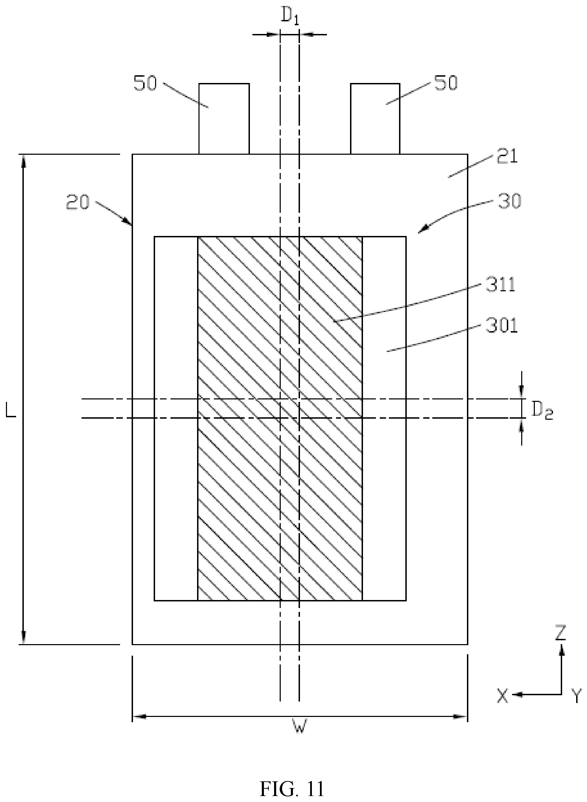

In some embodiments, referring to FIG. 11, along the first direction X, a width of the electrode assembly 20 is W, and along the third direction Z, a length of the electrode assembly 20 is L. Along the first direction X, a distance between a center of the first adhesive zone 3111 and a center of the first side surface 21 is $D_1$, satisfying $D_1 \leq 0.1W$. This configuration helps the adhesive member 30 suppress cell movement and reduce the risk of damage to the electrode plates on the outer periphery of the electrode assembly 20.

In some embodiments, referring to FIG. 11, along the third direction Z, a distance between the center of the first adhesive zone 3111 and the center of the first side surface 21 is $D_2$, satisfying $D_2 \leq 0.1L$. This configuration helps the adhesive member 30 suppress cell movement and reduce the risk of damage to the electrode plates on the outer periphery of the electrode assembly 20.

To verify the impact of the adhesive zones and non-adhesive zones of the adhesive member 30 on the electrochemical apparatus 100, the following tests were conducted:

A lithium-ion pouch battery with a rectangular maximum projection surface was selected, where the wound electrode assembly 20 inside the lithium-ion pouch battery has a length L of 87 mm, a width W of 64 mm, and a thickness of 4.8 mm.

In Examples 1 to 20, the adhesive member 30 includes a first adhesive layer 311, a second adhesive layer 322, a third adhesive layer 323, a first adhesive zone 3111, a second adhesive zone 3221, and a third adhesive zone 3231, with the first adhesive zone 3111 coinciding with the center of the first side surface 21. In the first side surface 21, along the first direction X, a distance from the first adhesive zone 3111 to a side edge of the substrate layer 301 is $W_2$, a distance from the first adhesive zone 3111 to another side edge of the substrate layer 301 is $W_3$, a distance between the second adhesive zone 3221 and the first adhesive zone 3111 is $H_1$, and a distance between the third adhesive zone 3231 and the first adhesive zone 3111 is $H_2$. Along the third direction Z, a distance from the first adhesive zone 3111 to a side edge of the substrate layer 301 is $L_2$, and a distance from the first adhesive zone 3111 to another side edge of the substrate layer 301 is $L_3$.

In Example 17, the second adhesive zone 3221 includes two second adhesive sub-zones spaced apart along the third direction Z, with a spacing of 4 mm between the two second adhesive sub-zones; and the third adhesive zone 3231 includes two third adhesive sub-zones spaced apart along the third direction Z, with a spacing of 4 mm between the two third adhesive sub-zones.

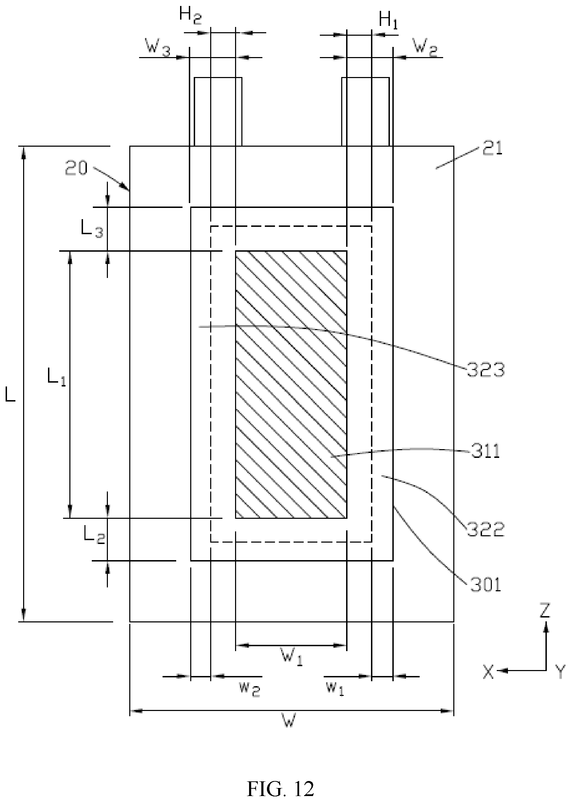

In Example 18, referring to FIG. 12, the bonding region of the adhesive member 30 with the electrode assembly 20 is in the shape of a larger square enclosing a smaller square, and the second side 32 includes a fourth adhesive zone and a fifth adhesive zone bonded to the first side surface 21. Along the third direction Z, the first non-adhesive zone 321 is located between the fourth adhesive zone and the fifth adhesive zone, the third direction Z being perpendicular to both the first direction X and the second direction Y. The width of the fourth adhesive zone and the fifth adhesive zone is equal to the width $w_1$ of the second adhesive zone 322 or the width $w_2$ of the third adhesive zone 3231.

In Examples 19 and 20, along the second direction Y, the projection of the first adhesive zone 3111 has a first overlapping region 36 with the second adhesive zone 3221, a width of the first overlapping region 36 along the first direction X is $q_1$, and the projection of the first adhesive zone 3111 has a second overlapping region 37 with the third adhesive zone 3231, a width of the second overlapping region 37 along the first direction X is $q_2$.

The dimensional parameters of the adhesive member 30 in the above examples are shown in Table 1 below.

In the comparative example, a double-sided adhesive tape with a length of 60.9 mm and a width of 38 mm was used to bond the first sidewall 11 to the first side surface 21.

For each group, 20 batteries were taken for a drop pass rate comparison test. The batteries were tested in a drop sequence of six faces and four corners, with a drop height of 1.8 m. After the drop, it was observed whether the housing 10 was breached or leaked, and the number of batteries with a breached or leaking housing 10 was counted. If the housing 10 was neither breached nor leaking, the lithium-ion pouch battery was disassembled to observe whether the electrode plates on the outer periphery of the electrode assembly 20 were torn or damaged, and the number of batteries with torn or damaged outer periphery electrode plates was counted. A battery was deemed to have passed the test if the housing 10 was neither breached nor leaking and the electrode plates on the outer periphery were neither torn nor damaged; otherwise, it was deemed to have failed the test. Pass rate = number of passes / 20 $\times$ 100%.

**Table 1 Test results of dimensional variations of adhesive layers in adhesive member 30**

| Group | Length $L_1$ of first adhesive layer 311 (mm) | Width $W_1$ of first adhesive layer 311 (mm) | Bonding length of one side of adhesive member 30 with electrode assembly 20 in cross-sectional view (mm) | Width $w_1$ of second adhesive zone 3221 (mm) or width $w_2$ of third adhesive zone 3231 (mm) | $W_2$ or $W_3$ (mm) | $H_1$ or $H_2$ (mm) | $L_2$ or $L_3$ (mm) | $q_1$ or $q_2$ (mm) | Number of tests | Number of housing breaches or leaks | Number of torn or damaged electrode plates on outer periphery | Pass rate (%) |
|---|---|---|---|---|---|---|---|---|---|---|---|---|
| Comparative example | - | - | - | - | - | - | - | - | 20 | 1 | 4 | 75 |
| Example 1 | 34.8 (0.4L) | 38.4 (0.6W) | 6.4 (0.1W) | 6.4 (0.1W) | 9.6 (0.15W) | 3.2 (0.05W) | 0 | - | 20 | 1 | 1 | 90 |
| Example 2 | 43.5 (0.5L) | 38.4 | 6.4 | 6.4 | 9.6 | 3.2 | 0 | - | 20 | 0 | 1 | 95 |
| Example 3 | 52.2 (0.6L) | 38.4 | 6.4 | 6.4 | 9.6 | 3.2 | 0 | - | 20 | 0 | 0 | 100 |
| Example 4 | 60.9 (0.7L) | 38.4 | 6.4 | 6.4 | 9.6 | 3.2 | 0 | - | 20 | 0 | 0 | 100 |
| Example 5 | 69.6 (0.8L) | 38.4 | 6.4 | 6.4 | 9.6 | 3.2 | 0 | - | 20 | 0 | 0 | 100 |
| Example 6 | 60.9 | 19.2 (0.3W) | 6.4 | 6.4 | 9.6 | 3.2 | 0 | - | 20 | 1 | 1 | 90 |
| Example 7 | 60.9 | 25.6 (0.4W) | 6.4 | 6.4 | 9.6 | 3.2 | 0 | - | 20 | 1 | 1 | 90 |
| Example 8 | 60.9 | 32 (0.5W) | 6.4 | 6.4 | 9.6 | 3.2 | 0 | - | 20 | 0 | 0 | 100 |
| Example 9 | 60.9 | 44.8 (0.7W) | 6.4 | 6.4 | 9.6 | 3.2 | 0 | - | 20 | 0 | 0 | 100 |
| Example 10 | 60.9 | 38.4 | 12.8 (0.2W) | 9.6 (0.15W) | - | 3.2 | 0 | - | 20 | 0 | 0 | 100 |
| Example 11 | 60.9 | 38.4 | 19.2 (0.3W) | 9.6 (0.15W) | - | 3.2 | 0 | - | 20 | 0 | 0 | 100 |

| Group | Length $L_1$ of first adhesive layer 311 (mm) | Width $W_1$ of first adhesive layer 311 (mm) | Bonding length of one side of adhesive member 30 with electrode assembly 20 in cross-sectional view (mm) | Width $w_1$ of second adhesive zone 3221 (mm) or width $w_2$ of third adhesive zone 3231 (mm) | $W_2$ or $W_3$ (mm) | $H_1$ or $H_2$ (mm) | $L_2$ or $L_3$ (mm) | $q_1$ or $q_2$ (mm) | Number of tests | Number of housing breaches or leaks | Number of torn or damaged electrode plates on outer periphery | Pass rate (%) |
|---|---|---|---|---|---|---|---|---|---|---|---|---|
| Example 12 | 60.9 | 38.4 | 25.6 (0.4W) | 9.6 (0.15W) | - | 3.2 | 0 | - | 20 | 0 | 0 | 100 |
| Example 13 | 60.9 | 38.4 | 32 (0.5W) | 9.6 (0.15W) | - | 3.2 | 0 | - | 20 | 0 | 0 | 100 |
| Example 14 | 60.9 | 38.4 | 38.4 (0.6W) | 9.6 (0.15W) | - | 3.2 | 0 | - | 20 | 0 | 0 | 100 |
| Example 15 | 60.9 | 38.4 | 44.8 (0.7W) | 9.6 (0.15W) | - | 3.2 | 0 | - | 20 | 0 | 0 | 100 |
| Example 16 | 60.9 | 38.4 | 6.4 | 6.4 | 12.8 (0.2W) | 6.4 (0.1W) | 0 | - | 20 | 1 | 0 | 95 |
| Example 17 | 60.9 (0.7L) | 38.4 | (In Example 17, two second adhesive sub-zones and two third adhesive sub-zones have an equal width) | | | | | | | | | |
| | | | 6.4 | 6.4 | 9.6 | 3.2 | 0 | - | 20 | 0 | 0 | 100 |
| Example 18 | 60.9 | 38.4 | 6.4 | 6.4 | 9.6 (0.15W) | 3.2 | 9.6 | - | 20 | 0 | 0 | 100 |
| Example 19 | 60.9 | 38.4 | 12.8 | 12.8 | 6.4 | - | 0 | 6.4 (0.1W) | 20 | 0 | 1 | 95 |
| Example 20 | 60.9 | 38.4 | 12.8 | 12.8 | 0 | - | 0 | 12.8 (0.2W) | 20 | 0 | 2 | 90 |

In some embodiments, referring to FIG. 12 and Table 1, along the first direction X, a width of the first adhesive zone 3111 is $W_1$, satisfying $0.3W \le W_1 \le 0.8W$. As can be seen from Table 1, when the condition $0.3W \le W_1 \le 0.8W$ is satisfied, the pass rate of the battery drop test is improved, which helps reduce the risk of movement of the electrode assembly 20 and damage to the electrode plates on the outer periphery of the electrode assembly 20.

In some embodiments, referring to FIG. 12 and Table 1, along the third direction Z, a length of the first adhesive zone 3111 is $L_1$, satisfying $0.4L \le L_1 \le 0.8L$. As can be seen from Table 1, when the condition $0.4L \le L_1 \le 0.8L$ is satisfied, the pass rate of the battery drop test is improved, which helps reduce the risk of movement of the electrode assembly 20 and damage to the electrode plates on the outer periphery of the electrode assembly 20.

In some embodiments, referring to FIG. 12 and Table 1, along the third direction Z, a length of the first adhesive zone 3111 is $L_1$, a length of the second adhesive zone 3221 is $l_1$, and a length of the third adhesive zone 3231 is $l_2$, satisfying: $l_1 \ge 0.4L_1$ and/or $l_2 \ge 0.4L_1$. When the above conditions are satisfied, the pass rate of the battery drop test is improved, which helps reduce the risk of movement of the electrode assembly 20 and damage to the electrode plates on the outer periphery of the electrode assembly 20. In Examples 1 to 16 and Examples 19 and 20, $l_1 = l_2 = L_1$. In Example 17, $l_1$

= I$_2$ = 56 mm, the length of I$_1$ does not include the 4 mm spacing between the two second adhesive sub-zones, and the length of I$_2$ does not include the 4 mm spacing between the two third adhesive sub-zones. Along the third direction Z, the length of each second adhesive sub-zone and each third adhesive sub-zone is 28 mm. In Example 18, I$_1$ = I$_2$ = L$_1$ + L$_2$ + L$_3$.

In some embodiments, referring to FIG. 12 and Table 1, $0 \leq L_2 \leq 0.4L_1$ and/or $0 \leq L_3 \leq 0.4L_1$ is satisfied. When the above conditions are satisfied, as can be seen from Table 1, the pass rate of the battery drop test is improved, which helps reduce the risk of movement of the electrode assembly 20 and damage to the electrode plates on the outer periphery of the electrode assembly 20 when the electrochemical apparatus is subjected to an impact.

In some embodiments, referring to FIG. 12 and Table 1, along the first direction X, a width of the second adhesive zone 3221 is w$_1$, and a width of the third adhesive zone 3231 is w$_2$, satisfying: $0.05W \leq w_1 \leq 0.45W$ and/or $0.05W \leq w_2 \leq 0.45W$. This configuration results in a better pass rate in the battery drop test, which helps reduce the risk of movement of the electrode assembly 20 and damage to the electrode plates on the outer periphery of the electrode assembly 20. In Examples 10 to 15, the second adhesive layer 322 is bonded to the second region 212, the third side surface 23, and/or the second side surface 22, and the third adhesive layer 323 is bonded to the third region 213, the fourth side surface 24, and/or the second side surface 22.

In some embodiments, referring to FIG. 3, FIG. 12, and Table 1, $W_2 \leq 0.45W$ and/or $W_3 \leq 0.45W$ is satisfied. When this condition is satisfied, as can be seen from Table 1, the pass rate of the battery drop test is improved, which helps reduce the risk of movement of the electrode assembly 20 and damage to the electrode plates on the outer periphery of the electrode assembly 20.

In some embodiments, referring to FIG. 12 and Table 1, $H_1 \leq 0.25W$ and/or $H_2 \leq 0.25W$ is satisfied. When this condition is satisfied, as can be seen from Table 1, the pass rate of the battery drop test is improved, which helps reduce the risk of movement of the electrode assembly 20 and damage to the electrode plates on the outer periphery of the electrode assembly 20.

In some embodiments, referring to FIG. 8, FIG. 12, and Table 1, $q_1 \leq 0.32W$ and/or $q_2 \leq 0.32W$ is satisfied. When this condition is satisfied, as can be seen from Table 1, the pass rate of the battery drop test is improved, which helps reduce the risk of movement of the electrode assembly 20 and damage to the electrode plates on the outer periphery of the electrode assembly 20.

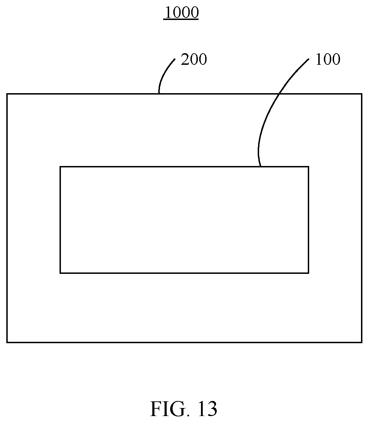

Referring to FIG. 13, embodiments of the present application further provide an electric device 1000, the electric device 1000 including the electrochemical apparatus 100 described above.

In some embodiments, referring to FIG. 13, the electric device 1000 further includes a device body 200, and the electrochemical apparatus 100 is mounted in the device body 200 to supply power to the device body 200.

In some embodiments, the electric device 1000 may be a Bluetooth headset, Bluetooth speaker, mobile phone, laptop computer, tablet computer, e-book reader, electric toy, gaming console, camcorder, portable recorder, radio, smartwatch, lighting device, calculator, or the like, which are not listed exhaustively herein.

Since the electric device 1000 adopts the technical solutions of any embodiments of the electrochemical apparatus 100 described above, it has at least the beneficial effects brought by the technical solutions of any embodiments of the electrochemical apparatus 100, which are not repeated herein.

In addition, those of ordinary skill in the art should recognize that the above embodiments are only used to illustrate the present application and are not intended to limit the present application. Any modifications, equivalent substitutions, and improvements made within the spirit and principles of the present application should be included within the scope of protection of the present application.

**Claims**

1. An electrochemical apparatus, comprising:

   a housing, the housing comprising a first sidewall;
   an electrode assembly, the electrode assembly being disposed within the housing, the electrode assembly comprising a first side surface adjacent to the first sidewall, and the first side surface comprising a first region, a second region and a third region, wherein, along a first direction, the first region is located between the second region and the third region; and
   an adhesive member, the adhesive member being located between the housing and the electrode assembly, the adhesive member comprising a first side and a second side opposite each other, the first side being adjacent to the housing, the second side facing away from the housing, the first side comprising a first adhesive layer, the first adhesive layer comprising a first adhesive zone bonded to the first sidewall; the second side comprising a second adhesive layer and a third adhesive layer, the second adhesive layer comprising a second adhesive zone bonded to the second region, the third adhesive layer comprising a third adhesive zone bonded to the third region, a surface of the second side comprising a first non-adhesive zone not bonded to the first region, and the first non-adhesive zone being located between the second adhesive zone and the third adhesive zone; wherein along a second direction, a projection of the first adhesive zone overlaps with the first non-adhesive zone, the second direction being a direction in which the first sidewall is opposite the first side surface.

2. The electrochemical apparatus according to claim 1, wherein the adhesive member further comprises a substrate layer, the first adhesive layer being disposed on a surface of the substrate layer facing the housing, and the second adhesive layer and the third adhesive layer being disposed on a surface of the substrate layer facing the electrode assembly.

3. The electrochemical apparatus according to claim 2, wherein a surface of the first side further comprises a second non-adhesive zone and a third non-adhesive zone not bonded to the first sidewall, wherein, along the first direction, the first adhesive zone is located between the second non-adhesive zone and the third non-adhesive zone; along the second direction, a projection of the second non-adhesive zone overlaps with the second adhesive zone, and a projection of the third non-adhesive zone overlaps with the third adhesive zone.

4. The electrochemical apparatus according to claim 3, wherein, along the second direction, the first non-adhesive zone covers the projection of the first adhesive zone, the projection of the second non-adhesive zone covers the second adhesive zone, and the projection of the third non-adhesive zone covers the third adhesive zone; and along the first direction, a distance between the first adhesive zone and the second adhesive zone is greater than 0, and a distance between the first adhesive zone and the third adhesive zone is greater than 0.

5. The electrochemical apparatus according to claim 2, wherein, along the second direction, the projection of the first adhesive zone covers the first non-adhesive zone, the projection of the first adhesive zone overlaps with the second adhesive zone, and the projection of the first adhesive zone overlaps with the third adhesive zone.

6. The electrochemical apparatus according to claim 3, wherein the adhesive member satisfies any one of the following conditions:

(1) a portion of a surface of the substrate layer facing the electrode assembly is exposed to form the first non-adhesive zone, and a portion of a surface of the substrate layer facing the housing is exposed to form the second non-adhesive zone and the third non-adhesive zone; or
(2) the adhesive member further comprises a first non-adhesive layer, a second non-adhesive layer, and a third non-adhesive layer; the first non-adhesive layer being bonded to a surface of the second adhesive layer and/or the third adhesive layer to form the first non-adhesive zone, the second non-adhesive layer being bonded to a side surface of the first adhesive layer facing away from the second region to form the second non-adhesive zone, and the third non-adhesive layer being bonded to a side surface of the first adhesive layer facing away from the third region to form the third non-adhesive zone.

7. The electrochemical apparatus according to claim 2, wherein the substrate layer comprises a first substrate portion and a second substrate portion, the first substrate portion being provided with the second adhesive layer and a portion of the first adhesive layer, and the second substrate portion being provided with the third adhesive layer and a portion of the first adhesive layer, and the substrate layer satisfies any one of the following conditions:

(1) the first substrate portion and the second substrate portion are arranged along the first direction; or
(2) the first substrate portion and the second substrate portion are arranged along a third direction, the third direction being perpendicular to both the first direction and the second direction.

8. The electrochemical apparatus according to claim 1, wherein, along the first direction, a width of the electrode assembly is W, and along a third direction, a length of the electrode assembly is L, the third direction being perpendicular to both the first direction and the second direction; and the electrochemical apparatus satisfies at least one of the following conditions:

(1) along the first direction, a distance between a center of the first adhesive zone and a center of the first side surface is $D_1$, satisfying $D_1 \leq 0.1\,W$;
(2) along the third direction, a distance between a center of the first adhesive zone and a center of the first side surface is $D_2$, satisfying $D_2 \leq 0.1L$;
(3) along the first direction, a width of the first adhesive zone is $W_1$, satisfying $0.3W \leq W_1 \leq 0.8W$;
(4) along the third direction, a length of the first adhesive zone is $L_1$, satisfying $0.4L \leq L_1 \leq 0.8L$;

(5) along the first direction, a width of the second adhesive zone is $w_1$, satisfying $0.05W \leq w_1 \leq 0.45W$;

(6) along the first direction a width of the third adhesive zone is $w_2$, satisfying $0.05W \leq w_2 \leq 0.45W$;

(7) along the third direction, a length of the first adhesive zone is $L_1$, and a length of the second adhesive zone is $l_1$, satisfying $l_1 \geq 0.4L_1$;

(8) along the third direction, a length of the first adhesive zone is $L_1$, and a length of the third adhesive zone is $l_2$, satisfying $l_2 \geq 0.4L_1$;

(9) the second adhesive zone comprises a plurality of second adhesive sub-zones spaced apart along the third direction; or

(10) the third adhesive zone comprises a plurality of third adhesive sub-zones spaced apart along the third direction.

9. The electrochemical apparatus according to claim 8, wherein the adhesive member further comprises a substrate layer, the first adhesive layer being disposed on a surface of the substrate layer facing the housing, and the second adhesive layer and the third adhesive layer being disposed on a surface of the substrate layer facing the electrode assembly;

along the first direction, a distance from the first adhesive zone to a side edge of the substrate layer is $W_2$, a distance from the first adhesive zone to another side edge of the substrate layer is $W_3$, a distance between the second adhesive zone and the first adhesive zone is $H_1$, a distance between the third adhesive zone and the first adhesive zone is $H_2$, and along the third direction, a distance from the first adhesive zone to a side edge of the substrate layer is $L_2$, and a distance from the first adhesive zone to another side edge of the substrate layer is $L_3$; and

the adhesive member satisfies at least one of the following conditions:

(1)

$$W_2 \leq 0.45W;$$

(2)

$$W_3 \leq 0.45W;$$

(3)

$$L_2 \leq 0.4L_1;$$

(4)

$$L_3 \leq 0.4L_1;$$

(5)

$$H_1 \leq 0.25W;$$

(6)

$$H_2 \leq 0.25W;$$

(7) along the second direction, the projection of the first adhesive zone has a first overlapping region with the second adhesive zone, and a width of the first overlapping region along the first direction is $q_1$, satisfying $q_1 \leq 0.32W$; or

(8) along the second direction, the projection of the first adhesive zone has a second overlapping region with the third adhesive zone, and a width of the second overlapping region along the first direction is $q_2$, satisfying $q_2 \leq 0.32W$.

10. The electrochemical apparatus according to claim 1, wherein the electrode assembly further comprises a second side surface, a third side surface, and a fourth side surface; the second side surface being disposed opposite the first side surface along the second direction, and the third side surface being disposed opposite the fourth side surface along the first direction, satisfying at least one of the following conditions:

(1) the second adhesive layer is bonded to both the second region and the third side surface; or
(2) the third adhesive layer is bonded to both the third region and the fourth side surface

11. The electrochemical apparatus according to claim 10, wherein at least one of the following conditions is satisfied:

(1) the second adhesive layer is bonded to the second side surface; or
(2) the third adhesive layer is bonded to the second side surface

12. An electric device, comprising the electrochemical apparatus according to any one of claims 1 to 11.

FIG. 1

FIG. 2

FIG. 3

FIG. 4

FIG. 5

FIG. 6

30

FIG. 7

FIG. 8

FIG. 9

FIG. 10

FIG. 11

FIG. 12

<u>1000</u>

200          100

FIG. 13

# EP 4 773 370 A1

## INTERNATIONAL SEARCH REPORT

International application No.

**PCT/CN2023/135986**

| A. CLASSIFICATION OF SUBJECT MATTER |
|---|
| H01M50/242(2021.01)i; H01M10/058(2010.01)i; H01M10/0525(2010.01)i |

According to International Patent Classification (IPC) or to both national classification and IPC

| B. FIELDS SEARCHED |
|---|
| Minimum documentation searched (classification system followed by classification symbols) |
| IPC:H01M50/-; H01M10/- |

Documentation searched other than minimum documentation to the extent that such documents are included in the fields searched

Electronic data base consulted during the international search (name of data base and, where practicable, search terms used)

CNABS, CNTXT, ENTXTC, OETXT, VEN, WPABSC, CNKI, ISI Web of Science: 窜动, 第二, 第三, 第一, 电极组件, 短路, 非粘接, 非粘结, 非粘性, 基材, 壳体, 投影, 粘接, 粘结, 粘性, electrochemical device, insulating tape, second surface, short circuit

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2022160273 A1 (NINGDE AMPEREX TECHNOLOGY LTD.) 04 August 2022 (2022-08-04) <br> description, paragraphs 4-22, and figure 9 | 1-3, 5-7, 12 |
| A | CN 114270622 A (NINGDE AMPEREX TECHNOLOGY LTD.) 01 April 2022 (2022-04-01) <br> entire document | 1-12 |
| A | CN 115621654 A (NINGDE AMPEREX TECHNOLOGY LTD.) 17 January 2023 (2023-01-17) <br> entire document | 1-12 |
| A | WO 2022160269 A1 (NINGDE AMPEREX TECHNOLOGY LTD.) 04 August 2022 (2022-08-04) <br> entire document | 1-12 |
| A | CN 113782805 A (NINGDE AMPEREX TECHNOLOGY LTD.) 10 December 2021 (2021-12-10) <br> entire document | 1-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 July 2024** | **18 July 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/135986** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 113728493 A (NINGDE AMPEREX TECHNOLOGY LTD.) 30 November 2021 (2021-11-30)<br>    entire document | 1-12 |

## INTERNATIONAL SEARCH REPORT
### Information on patent family members

International application No.

**PCT/CN2023/135986**

| Patent document cited in search report | | | Publication date (day/month/year) | Patent family member(s) | Publication date (day/month/year) |
|---|---|---|---|---|---|
| WO | 2022160273 | A1 | 04 August 2022 | None | |
| CN | 114270622 | A | 01 April 2022 | None | |
| CN | 115621654 | A | 17 January 2023 | None | |
| WO | 2022160269 | A1 | 04 August 2022 | None | |
| CN | 113782805 | A | 10 December 2021 | None | |
| CN | 113728493 | A | 30 November 2021 | None | |

Form PCT/ISA/210 (patent family annex) (July 2022)